# FASCICULE DE BREVET EUROPEEN

(11) **EP 4 408 716 B1**
(45) Date de publication et mention de la délivrance du brevet: **24.09.2025**
(21) Numéro de dépôt: 22757986.9
(22) Date de dépôt: 02.08.2022
(51) Int. Cl.: B60W 30/095, B60W 30/16, B60W 30/18

(54) **PROCÉDÉ ET DISPOSITIF DE DÉTECTION D'INSERTION DANS UNE VOIE DE CIRCULATION D'UN VÉHICULE**
VERFAHREN UND VORRICHTUNG ZUM ERKENNEN EINES ZUSAMMENFÜHRENS EINES FAHRZEUGS IN EINE FAHRSPUR
METHOD AND DEVICE FOR DETECTING MERGING OF A VEHICLE INTO A TRAFFIC LANE

(30) Priorité: 29.09.2021 FR 2110242
(43) Date de publication de la demande: 07.08.2024
(73) Titulaire: Stellantis Auto SAS, 78300 Poissy (FR)
(72) Inventeur: VIVET, Luc, 75016 PARIS 16 (FR); TOUIL, Lhassane, Kenitra, 14000 (MA); MAHERAULT, Benoit, 91120 PALAISEAU (FR); LINCONNU, Martial, 75015 PARIS 15 (FR); REY, Alexis, 92210 ST CLOUD (FR)
(74) Mandataire: ESIP
(86) Numéro de dépôt international: PCT/FR2022/051546
(87) Numéro de publication internationale: WO 2023/052692

(56) Documents cités:
- EP-A2- 1 932 742
- EP-A2- 2 676 857
- FR-A1- 3 103 438
- US-A1- 2005 010 351
- US-A1- 2005 251 323
- US-A1- 2018 029 602

## Description

L'invention est dans le domaine des systèmes d'aide à la conduite de véhicule autonome. En particulier, l'invention concerne un procédé et dispositif de détection d'insertion dans une voie de circulation d'un véhicule, dit véhicule cible, depuis un véhicule autonome, dit véhicule égo, pour une conduite autonome dudit véhicule égo en fonction d'un indicateur de présence dudit véhicule cible.

On entend par « véhicule » tout type de véhicule tel qu'un véhicule automobile, un cyclomoteur, une motocyclette, un robot de stockage dans un entrepôt, etc. On entend par « conduite autonome » d'un « véhicule autonome » tout procédé apte à assister la conduite du véhicule. Le procédé peut ainsi consister à diriger partiellement ou totalement le véhicule ou à apporter tout type d'aide à une personne physique conduisant le véhicule. Le procédé couvre ainsi toute conduite autonome, du niveau 0 au niveau 5 dans le barème de l'OICA, pour Organisation International des Constructeurs Automobiles.

Les procédés aptes à assister la conduite du véhicule sont aussi nommés ADAS (de l'acronyme anglais « Advanced Driver Assistance Systems »), systèmes ADAS ou systèmes d'aide à la conduite. Ces systèmes sont connus d'être embarqués dans un véhicule, dit véhicule égo. Ces systèmes comportent des capteurs aptes à percevoir l'environnement (comme, par exemple, détecter un autre véhicule, acquérir des informations comme une position, une vitesse, une accélération de l'autre véhicule, détecter et identifier des voies de circulation, ...). Ces systèmes comportent également des capteurs aptes à mesurer des paramètres et variable du véhicule (comme, par exemple, la position, une vitesse, une accélération, un régime moteur, l'actionnement d'un clignotant, ...). Egalement, ces systèmes comportent des actionneurs aptes à modifier le comportement statique et dynamique du véhicule, et aussi comportent des moyens de communications aptes à communiquer avec un autre véhicule, un serveur, un passager du véhicule ...

En particulier, parmi les systèmes ADAS, un régulateur de vitesse adaptatif est apte à suivre un véhicule, dit véhicule cible, afin de mouvoir le véhicule égo selon une même dynamique que le véhicule cible en respectant un temps inter véhicule (ou distance inter véhicule ; les deux sont équivalents) et une consigne de vitesse maximum fournie, par exemple, par un conducteur/passager du véhicule égo. Un dispositif de maintien dans la voie tient également compte de la présence d'un véhicule cible.

Le suivi d'un véhicule cible est très difficilement gérable entrée ou sortie de virage. En effet, lorsqu'un véhicule cible se décale légèrement latéralement par rapport au véhicule égo ou une trajectoire du véhicule égo, soit le véhicule entre en virage soit le véhicule cible change de voie pour, par exemple, circuler dans le voie de circulation du véhicule égo. Généralement, la trajectoire du véhicule égo est déterminée par une reconnaissance des voies de circulation et de leurs courbures à partir d'un traitement d'image, et une reconnaissance de la voie sur laquelle circule le véhicule égo. Dans de nombreuses situation, une détermination trajectoire du véhicule égo est temporairement incohérente avec une trajectoire d'une voie sur la quelle circule le véhicule égo. La reconnaissance des voies par une caméra embarquée n'est pas possible (marquages au sol masqués, effacés, et/ou non lisibles à cause de l'ensoleillement, de la météo, d'une présence d'autres objets/véhicules, de travaux ...). Il en résulte, par exemple, une mauvaise désélection d'un véhicule ou une mauvaise sélection d'un véhicule circulant dans une voie adjacente.

En outre, l'état de la technique est connu des documents US2018029602A, FR-A-3103438 et EP-A-2676857.

Un objet de la présente invention est de remédier au problème précité, en particulier sélectionner de manière robuste (plus de disponibilité, fonctionnel en ligne droite et en virage) et simple un objet circulant devant le véhicule égo. Il n'est pas besoin d'identifier et de modéliser une trajectoire des voies
A cet effet, un premier aspect de l'invention concerne un procédé de détection d'insertion dans une voie de circulation d'un véhicule, dit véhicule cible, depuis un véhicule autonome, dit véhicule égo, pour une conduite autonome dudit véhicule égo en fonction d'un indicateur de présence dudit véhicule cible, ledit véhicule égo circulant sur ladite voie de circulation et comportant des capteurs aptes à fournir des données dudit véhicule égo et de l'environnement extérieure dudit véhicule égo, ledit procédé comportant les étapes de :
- Détection, à partir de lesdits capteurs, dudit véhicule cible ;
- Détermination, à partir de lesdits capteurs, d'au moins une information du positionnement relatif dudit véhicule cible par rapport au véhicule égo ;
- Détermination, à partir de lesdits capteurs, d'une trajectoire dudit véhicule égo, la trajectoire indiquant des positions estimées dudit véhicule égo sur un horizon de temps prédéterminé ;
- Détermination d'une distance minimale entre ledit véhicule cible et ladite trajectoire, la détermination étant fondée sur ladite au moins une information du positionnement relatif ;
- Détermination d'un premier seuil, dit seuil de sélection, ledit seuil de sélection représentant une distance et étant fondé sur une vitesse longitudinale dudit véhicule égo et sur ledit horizon de temps ;
- si ladite distance minimale est inférieure audit seuil de sélection, augmentation de l'indicateur de présence dudit véhicule cible ;
- génération d'une instruction de conduite autonome à partir de l'indicateur de présence.

Ainsi, la conduite autonome pourra adapter le pilotage du véhicule, tout comme le ferait un conducteur, en prenant en compte une interférence future, dans un horizon de temps donné (équivalant à une durée), entre ledit véhicule égo et un autre véhicule. Il n'est pas nécessaire de prédire ou de construire la trajectoire future du véhicule cible et, en particulier, il n'est pas nécessaire de détecter les lignes séparant les voies de circulation. Le seuil étant fondée sur la vitesse longitudinale du véhicule égo, le procédé de détection est fonctionnel en ligne droite, en entrée ou sortie de virage, et en virage. Plus particulièrement, en entrée ou sortie de virage, un véhicule circulant sur une voie adjacente à la voie de circulation dudit véhicule égo ne sera pas considéré comme présent (probabilité de présence nulle ou faible).

Avantageusement, ledit seuil de sélection est égale à Y1(V) = min(Y0 ; LVo + 0,5*AlatMax(V)*t^2 - 0,5*LVC), où min représente une fonction minimum entre valeurs, Y0 est une distance latérale prédéterminée, LVo est une largeur prédéterminée de ladite voie de circulation, V est ladite vitesse longitudinale, AlatMax(V) est une accélération latérale maximale fonction de ladite vitesse longitudinale, t est ledit horizon de temps, et LVC est une largeur prédéterminée dudit véhicule cible.

Ainsi, le seuil de sélection, dépendant de la vitesse et de l'horizon de temps, est simplement paramétré et valable pour toutes les vitesses longitudinales du véhicule égo. La mise au point est très simple. Elle se base sur la physique du véhicule et ne nécessite pas des essais véhicule pour différentes vitesses longitudinales et pour différent rayons de courbure de virage.

Avantageusement, ledit procédé comporte, en outre, une étape de détermination d'un deuxième seuil, dit seuil de désélection, ledit seuil de désélection représentant une distance strictement supérieure au seuil de sélection, ledit seuil de désélection étant fondé sur une vitesse longitudinale dudit véhicule égo et sur ledit horizon de temps, si ladite distance minimale est supérieure audit seuil de désélection, alors l'indicateur de présence décroît, sinon l'indicateur de de présence reste inchangé.

Ainsi, la détermination de la probabilité de présence sera encore plus robuste, en particulier en cas de mauvaise perception dudit véhicule cible. Un véhicule cible circulant sur la même voie de circulation dudit véhicule égo restera considéré comme présent (probabilité de présence à 100% ou forte) en entrée ou sortie de virage malgré les incertitudes de détection d'entrée ou de sortie de virage du véhicule égo et/ du véhicule cible. L'écart entre le seuil de sélection et le seuil de désélection est dite zone Linconnu.

Avantageusement, ledit seuil de désélection est égale à Y2(V) = min(Y0, 0,5*AlatMax(V)*t^2 - 0,5*LVC), où min représente ladite fonction minimum, Y0 est ladite distance latérale prédéterminée, V est ladite vitesse longitudinale, AlatMax(V) est ladite accélération latérale maximale fonction de ladite vitesse longitudinale, t est ledit horizon de temps, et LVC est ladite largeur prédéterminé dudit véhicule cible.

Avantageusement, le procédé est exécuté périodiquement, une probabilité de présence, comprise entre 0% et 100%, est déterminée à partir d'un historique des déterminations dudit indicateur de présence, et ladite conduite autonome est fonction de ladite probabilité de présence.

Ainsi, les détections sont consolidées dans le temps. Cela apporte plus de robustesse de détection et permet moins de variations sur la conduite autonome du véhicule égo rendant ainsi une conduite plus lisse et moins brusque.

Un deuxième aspect de l'invention concerne un dispositif comprenant une mémoire associée à au moins un processeur configuré pour mettre en œuvre le procédé selon le premier aspect de l'invention.

L'invention concerne aussi un véhicule comportant le dispositif.

L'invention concerne aussi un programme d'ordinateur comprenant des instructions adaptées pour l'exécution des étapes du procédé, selon le premier aspect de l'invention, lorsque ledit programme est exécuté par au moins un processeur.

D'autres caractéristiques et avantages de l'invention ressortiront de la description des modes de réalisation non limitatifs de l'invention ci-après, en référence aux figures annexées, sur lesquelles :
[Fig. 1] illustre une situation de vie de l'état de l'art
[Fig. 2] illustre schématiquement un dispositif, selon un exemple particulier de réalisation de la présente invention.
[Fig. 3] illustre schématiquement un procédé de détection d'insertion dans une voie de circulation d'un véhicule, selon un exemple particulier de réalisation de la présente invention.

L'invention est décrite ci-après dans son application, non limitative, au cas d'un véhicule automobile autonome circulant sur une route ou sur une voie de circulation. D'autres applications telles qu'un robot dans un entrepôt de stockage ou encore une motocyclette sur une route de campagne sont également envisageables.

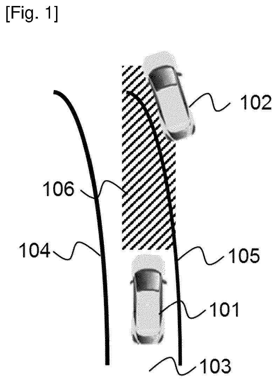

La figure 1 représente une situation de vie de l'état de l'art. Un véhicule égo 101 circule sur une voie de circulation 103 délimitée par un côté/marquage gauche 104 et un côté/marquage droit 105. Dans de nombreux cas (mauvaise météo - pluie, neige, lumière rasante, etc -, usure, masquage, ...) les marquages 104, 105 ne seront pas détecté par un capteur d'un système ADAS embarqué dans le véhicule égo 101. Adjacent à cette voie de circulation 103, un autre véhicule 102 circule également. Par exemple, la voie de circulation 103 peut représenter une entrée de virage. Le véhicule égo 101 circule en ligne droite, les capteurs du véhicule égo 101 ne mesurent aucune intention de virer et de suivre une courbure de la voie de circulation 103, en particulier si les marquages 104,105 ne sont pas détectés par un autre système.

La zone hachurée 106 représente la trajectoire que va suivre le véhicule égo 101 sur un horizon de temps donnée (par exemple 1,5 secondes). Un capteur de suivi, de type RADAR ou LIDAR par exemple, détecter l'autre véhicule 102. L'autre véhicule est alors sélectionné pour être, par exemple, considéré comme un véhicule cible d'un système d'aide à la conduite. Ceci entraine un comportant non souhaitée (fort freinage ...) du véhicule égo 101.

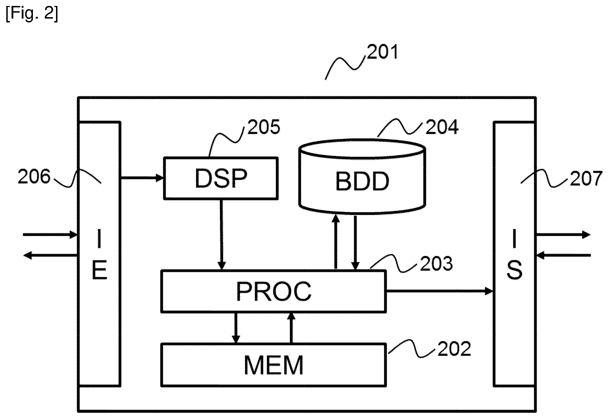

La figure 2 représente un exemple de dispositif 201 compris dans le véhicule, dans un réseau (« cloud ») ou dans un serveur. Ce dispositif 201 peut être utilisé en tant que dispositif centralisé en charge d'au moins certaines étapes du procédé décrit ci-après en référence à la figure 2. Dans un mode de réalisation, il correspond à un calculateur de conduite autonome.

Dans la présente invention, le dispositif 201 est compris dans le véhicule.

Ce dispositif 201 peut prendre la forme d'un boitier comprenant des circuits imprimés, de tout type d'ordinateur ou encore d'un téléphone mobile (« smartphone »).

Le dispositif 201 comprend une mémoire vive 202 pour stocker des instructions pour la mise en œuvre par un processeur 203 d'au moins une étape du procédé tel que décrit ci-avant. Le dispositif comporte aussi une mémoire de masse 204 pour le stockage de données destinées à être conservées après la mise en œuvre du procédé.

Le dispositif 201 peut en outre comporter un processeur de signal numérique (DSP) 205. Ce DSP 205 reçoit des données pour mettre en forme, démoduler et amplifier, de façon connue en soi ces données.

Le dispositif 201 comporte également une interface d'entrée 206 pour la réception des données mises en œuvre par le procédé selon l'invention et une interface de sortie 207 pour la transmission des données mises en œuvre par le procédé selon l'invention.

Par exemple, l'interface d'entrée 206 peut réceptionner les données suivantes : position ou localisation géographique du véhicule, vitesse et/ou accélération du véhicule, positions/vitesses/accélérations consignes ou prédéterminées, régime moteur, position et/ou course de la pédale d'embrayage, de frein et/ou d'accélération, détection d'autres véhicules ou objets, position ou localisation géographique des autres véhicules ou objets détectés, vitesse et/ou accélération des autres véhicules ou objets détectés, états de fonctionnement de capteurs, indice de confiance de données issues ou traitées par des capteurs et/ou dispositifs similaires au dispositif 201. Par exemple, les capteurs aptes à fournir des données sont : GPS associé ou non à une cartographie, tachymètres, accéléromètres, RADAR, LIDAR, lasers, ultra-sons, caméra ...

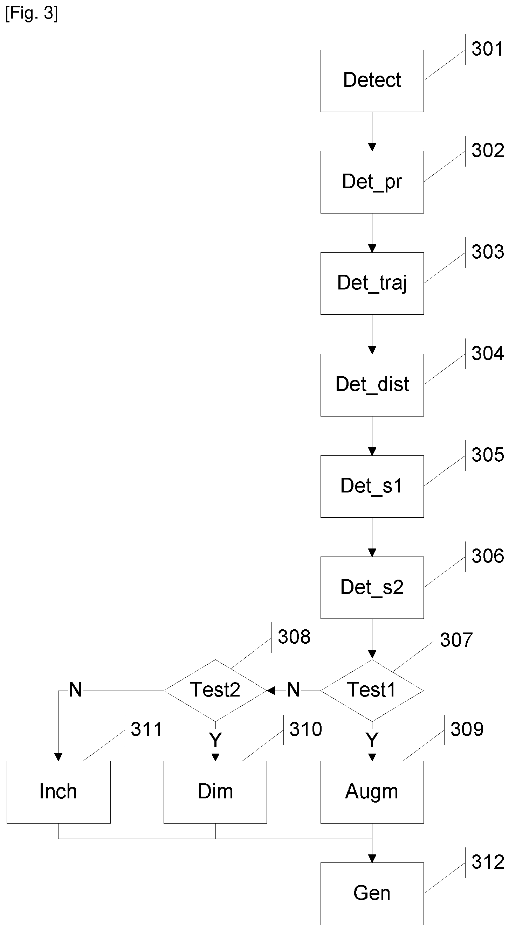

La figure 3 illustre schématiquement un procédé de détection d'insertion dans une voie de circulation 103 d'un véhicule, dit véhicule cible, depuis un véhicule autonome, dit véhicule égo 101, pour une conduite autonome dudit véhicule égo 101 en fonction d'un indicateur de présence dudit véhicule cible, ledit véhicule égo 101 circulant sur ladite voie de circulation 103 et comportant des capteurs aptes à fournir des données dudit véhicule égo 101 et de l'environnement extérieure dudit véhicule égo 101, selon un exemple particulier de réalisation de la présente invention.

Dans un mode opératoire, l'indicateur de présence est un booléen pour indiquer si un véhicule cible est présent ou non. Par exemple, si le véhicule cible n'est pas détecté initialement comme présent, l'indicateur de présence est égal à 0, et une augmentation dudit indicateur de présence entraine une valeur de 1 pour l'indicateur de présence. Une diminution de l'indicateur de présence entraine une valeur de 0 pour l'indicateur de présence.

Dans un autre mode opératoire, l'indicateur de présence est un nombre qui peut croitre et décroitre. Une augmentation ou diminution de l'indicateur de présence est fonction d'une distance minimale décrite ci-après. Par exemple, l'indicateur de présence passera graduellement de 0 à 1 lorsque la distance minimale est inférieure à un seuil de sélection décrit ci-après.

Dans un autre mode opératoire, une probabilité de présence, comprise entre 0% et 100%, est déterminée à partir d'un historique des déterminations dudit indicateur de présence. Ladite conduite autonome est fonction de ladite probabilité de présence.

L'étape 301, Detect, est une étape de détection, à partir de lesdits capteurs, dudit véhicule cible. Par exemple, la détection est faite à partir d'un traitement d'image d'une caméra embarquée dans le véhicule égo 101, par un traitement de donnée issues de capteurs basés sur les ondes électromagnétiques, lumineuses et/ou sonores.

L'étape 302, Det_pr, est une étape de détermination, à partir de lesdits capteurs, d'au moins une information du positionnement relatif dudit véhicule cible par rapport au véhicule égo 101. Un objet ayant été détecté, il est possible de déterminer la position d'un point de l'objet détecté par rapport à un repère du véhicule égo 101, c'est une position relative qui est déterminée. Par exemple, dans le cas d'un véhicule détecté à droite par rapport au sens de marche du véhicule égo 101, le point le plus proche, généralement l'arrière gauche du véhicule cible, sera exprimé dans un repère du véhicule égo 101, par exemple au centre à l'avant du véhicule égo 101. La position du véhicule cible détecté est exprimé dans un repère par rapport au véhicule égo 101 facilitant ainsi un post traitement.

L'étape 303, det_traj, est une étape de détermination, à partir de lesdits capteurs, d'une trajectoire dudit véhicule égo 101, la trajectoire indiquant des positions estimées dudit véhicule égo 101 sur un horizon de temps prédéterminé. Classique, un traitement de données issues de ces capteurs sont aptes à mesurer la dynamique (position vitesse, accélération linéaire ou rotationnel) longitudinale et transversale du véhicule égo 101 ou à mesurer des entrées (angle volant, enfoncement d'une pédale, ...) d'un conducteur ou d'un organe de commande. Un traitement temporel de ces données donne une trajectoire estimée du véhicule égo 101. Dans un cas simple, à un instant donné, un angle volant mesuré de 0° et une vitesse véhicule longitudinale mesurée de 10 m/s, donne une estimation d'un avancement en ligne droite du véhicule égo 101 et au bout, par exemple 1,5 secondes, le véhicule aura avancé de 15 mètres.

Classiquement l'horizon de temps est de l'ordre de secondes, d'autres valeurs sont possibles. Dans un mode opératoire, l'horizon de temps varie avec la vitesse du véhicule ou d'autres paramètres comme un temps inter véhicule sélectionné par un conducteur ou prédéfini en conception.

La trajectoire indique les positions estimées successives du véhicule égo 101 sur plusieurs instants. Cette trajectoire est généralement exprimée paramétriquement par rapport au temps dans un repère du véhicule égo 101.

L'étape 304, Det_dist, est une étape de détermination d'une distance minimale entre ledit véhicule cible et ladite trajectoire, la détermination étant fondée sur ladite au moins une information du positionnement relatif. En exprimant dans un même repère les coordonnées du véhicule cible et de la trajectoire estimée, la distance minimale entre le véhicule cible et la trajectoire estimée est déterminée par projection par exemple.

L'étape 305, Det_s1, est une étape de détermination d'un premier seuil, dit seuil de sélection, ledit seuil de sélection représentant une distance et étant fondé sur une vitesse longitudinale dudit véhicule égo 101 et sur ledit horizon de temps.

Le seuil de sélection sert à caractériser la distance minimale, et, par exemple, indiquer si le véhicule cible est proche ou non du véhicule égo 101, indiquer si le véhicule cible est dans la trajectoire du véhicule égo 101, ...

Dans un mode opératoire, le seuil de sélection varie en fonction de la vitesse du véhicule égo 101, dite aussi vitesse longitudinale. Plus la vitesse du véhicule égo 101 est faible plus le seuil est faible. Par exemple le seuil de sélection varie entre 0,2 et 1,3 mètres. D'autres valeurs sont possibles et dépendent du repère dans lequel sont exprimés les coordonnées des positions, vitesses et accélérations mesurées.

Avantageusement, ledit seuil de sélection est égale à Y1(V) = min(Y0 ; LVo + 0,5*AlatMax(V)*t^2 - 0,5*LVC), où min représente une fonction minimum entre valeurs, Y0 est une distance latérale prédéterminée, LVo est une largeur prédéterminée de ladite voie de circulation 103, V est ladite vitesse longitudinale, AlatMax(V) est une accélération latérale maximale fonction de ladite vitesse longitudinale, t est ledit horizon de temps, et LVC est une largeur prédéterminée dudit véhicule cible.

La distance prédéterminée Y0 est de l'ordre de 1 mètre, mais d'autres valeurs sont possibles. Y0 peut représenter la distance entre un côté du véhicule égo 101 et un bord de la voie sur laquelle circule le véhicule égo 101. Dans un mode opératoire, ces valeurs sont fonction de la vitesse du véhicule égo 101 et/ou du véhicule cible afin de prendre en compte un dangerosité (vitesse élevé) ou des incertitudes de mesures variant selon la vitesse du véhicule égo 101. Par exemple en ligne droite, Y0 est plus petit que le deuxième terme/valeur de la fonction minimum. Avantageusement, la largeur de la voie LVo est égale à 3,5 mètres. D'autres valeurs sont possibles. Dans un mode opératoire, la largeur de la Voie est fonction de mesures issues de capteurs ou de données embarquées ou débarquées dans le véhicule égo 101. Dans un autre mode opératoire, une valeur du paramètre largeur de la voie véhicule cible dépend du repère véhicule égo considéré et/ou dépend de la position du véhicule égo 101 par rapport à la voie de circulation 103.

Avantageusement, la largeur du véhicule cible LVC est égale à 1,6 mètres. Une largeur du véhicule égo 101 est sensiblement également égale à la largeur du véhicule cible. D'autres valeurs sont possibles. Dans un mode opératoire, la largeur du véhicule cible est fonction de mesures issues de capteurs ou de données embarquées ou débarquées dans le véhicule égo 101. Dans un autre mode opératoire, une valeur du paramètre largeur du véhicule cible dépend du point considéré du véhicule cible pour calculer la distance minimale et/ou dépend de la position du véhicule égo 101 par rapport à la voie de circulation 103.

AlatMax(V) est une accélération latérale maximale fonction de ladite vitesse longitudinale. Classiquement, AlatMax(V) est une fonction paramétrée en fonction de la vitesse du véhicule égo 101. Dans un mode opératoire, cette fonction est représentée par un tableau ou une cartographie.

Dans un mode opératoire préféré, la fonction AlatMax(V) représente une accélération latérale maximum avant une perte de confort. C'est une fonction décroissante avec la vitesse véhicule égo entre 6 m/s² et 2 m/s². Par exemple, plus la vitesse véhicule égo est faible plus nous sommes aptes à supporter un accélération transversale importante. Plus la vitesse véhicule est forte moins nous nous sentons en sécurité en virage et moins forte doit être l'accélération transversale maximum.

Sur un horizon de temps fixé, par exemple 1,5 secondes, la fonction AlatMax(V) anticipe l'écart latéral maximum que va faire le véhicule égo 101 s'il tourne et si on souhaite rester dans une accélération latérale de confort.

L'expression « LVo + 0,5*AlatMax(V)*t^2 - 0,5*LVC » représente un écart latéral ou une distance en mètre par rapport à l'axe longitudinal passant par le milieu du véhicule égo 101. Cet écart prend en compte le déplacement, 0,5*AlatMax(V)*t^2, latéral possible du véhicule égo 101 sur la durée définie par l'horizon de temps. Si la distance minimale est inférieure à cet écart, alors il y a un risque de collision car le véhicule égo 101 va potentiellement s'approcher trop, pendant la durée définie par l'horizon de temps, du véhicule cible. Le déplacement latéral maximal du véhicule égo 101, basé sur la fonction ALatMax, est pris en compte sur un horizon de temps donné.

L'étape 306, Det_s2, est une étape de détermination (306) d'un deuxième seuil, dit seuil de désélection, ledit seuil de désélection représentant une distance strictement supérieure au seuil de sélection, ledit seuil de désélection étant fondé sur une vitesse longitudinale dudit véhicule égo 101 et sur ledit horizon de temps. Le seuil de désélection sert à caractériser une distance d'éloignement, et, par exemple, indiquer si le véhicule cible s'éloigne ou non du véhicule égo 101, indiquer si le véhicule cible reste dans la trajectoire du véhicule égo 101, ...

Dans un mode opératoire, le seuil de désélection varie en fonction de la vitesse du véhicule égo 101. Plus la vitesse du véhicule égo 101 est importante plus le seuil de désélection est faible. Par exemple le seuil de désélection varie entre 2 et 0,5 mètres. D'autres valeurs sont possibles et dépendent du repère dans lequel sont exprimés les coordonnées des positions, vitesses et accélérations mesurées.

Avantageusement, ledit seuil de désélection est égale à Y2(V) = min(Y0, 0,5*AlatMax(V)*t^2 - 0,5*LVC), où min représente ladite fonction minimum, Y0 est ladite distance latérale prédéterminée, V est ladite vitesse longitudinale, AlatMax(V) est ladite accélération latérale maximale fonction de ladite vitesse longitudinale, t est ledit horizon de temps, et LVC est ladite largeur prédéterminé dudit véhicule cible.

Dans un mode opératoire préféré, ALatMax(V) est la même fonction, donnant une accélération latérale maximum en fonction de la vitesse du véhicule égo 101, que celle utilisée dans la détermination du seuil de sélection. Dans un autre mode opératoire, la même fonction avec un paramétrage différent est utilisée. Dans un autre mode opératoire, une fonction différente est utilisée.

L'expression « 0,5*AlatMax(V)*t^2 - 0,5*LVC » représente un écart latéral ou une distance en mètre par rapport à l'axe longitudinal passant par le milieu du véhicule égo 101. Cet écart prend en compte le déplacement, 0,5*AlatMax(V)*t^2, latéral possible du véhicule égo 101 sur la durée définie par l'horizon de temps. Si la distance minimale est supérieure à cet écart, alors il y a peu de risque de collision car le véhicule égo 101 ne va pas pouvoir trop s'approcher, pendant la durée définie par l'horizon de temps, du véhicule cible. Le déplacement latéral maximal du véhicule égo 101, basé sur la fonction ALatMax, est pris en compte sur un horizon de temps donné.

L'étape 307, Test1, est une étape de test pour vérifier si ladite distance minimale est inférieure audit seuil de sélection. Dans l'affirmative, le véhicule égo 101 et le véhicule cible se rapprochent et on passe dans l'étape 309.

L'étape 308, Test2, est une étape de test pour vérifier si ladite distance minimale est supérieure audit seuil de désélection. Dans l'affirmative, le véhicule égo 101 et le véhicule cible s'éloigne et on passe dans l'étape 310.

L'étape 309, Augm, est une étape d'augmentation de l'indicateur de présence dudit véhicule cible. Dans un mode opératoire cette augmentation est le passage de 0 à 1 de la valeur de l'indicateur de présence. Dans un autre mode opératoire, l'augmentation est fonction d'un incrément prédéterminé ou d'un incrément fonction de la distance minimale (plus la distance minimale est petite plus l'incrément est important).

L'étape 310, Dim, est une étape décroissance de l'indicateur de présence. Dans un mode opératoire cette décroissance ou diminution est le passage de 1 à 0 de la valeur de l'indicateur de présence. Dans un autre mode opératoire, la diminution est fonction d'un incrément prédéterminé ou d'un incrément fonction de la distance minimale (plus la distance minimale est grande par rapport au seuil de désélection plus l'incrément est important).

L'étape 311, Inch, est une étape où l'indicateur de de présence reste inchangé. Nous sommes dans la zone dite Linconnu. Cette zone est dynamique et dépend de la vitesse du véhicule égo 101. Plus la vitesse du véhicule égo 101 est faible plus la zone, écart entre le seuil de désélection et le seuil de sélection, est grande. A très forte vitesse véhicule, par exemple supérieur à 40 m/s, cet écart est réduit à 0, Y1(V)=Y2(V)=Y0.

L'étape 312, Gen, est une étape de génération d'une instruction de conduite autonome à partir de l'indicateur de présence. La présence ou non d'un véhicule cible risquant d'interférer sur une trajectoire future, sur l'horizon de temps, du véhicule égo 101 est une information essentielle pour la conduite autonome. Dans la présente invention, cette présence est fiabilisée en prenant en compte des incertitudes fonction de la vitesse du véhicule égo 101. En cas d'incertitude, dans la zone Linconnu, l'indicateur de présence n'est pas modifié.

Avantageusement, le procédé est exécuté périodiquement. La période est de l'ordre de 10 millisecondes. D'autres valeurs de périodes sont possibles, comme par exemple 10 microsecondes ou 10 secondes. Dans un mode opératoire, la période peut même être variable suivant la charge de calcul, la vitesse du véhicule ou d'autres conditions. Ainsi, la détection d'un véhicule cible est quasi permanente tout comme la génération de l'instruction de conduite permettant ainsi une rétroaction régulière, et ainsi être adaptif en fonction du contexte de la circulation (vitesse du véhicule, présence de véhicule cible, types de route, ...).

Avantageusement, une probabilité de présence, comprise entre 0% et 100%, est déterminée à partir d'un historique des déterminations dudit indicateur de présence, et ladite conduite autonome est fonction de ladite probabilité de présence. En effet, plus l'indicateur de présence est inférieur à Y1(V) plus on est certain de détection un véhicule qui s'insère dans la voie de circulation 103 du véhicule égo 101. Plus longtemps l'indicateur de présence reste inférieur à Y1(V) plus on est certain de détection un véhicule qui s'insère dans la voie de circulation 103 du véhicule égo 101. Inversement, plus l'indicateur de présence est supérieur à Y2(V) ou plus longtemps l'indicateur est supérieur à Y2(V), plus on est certain de désélectionner le véhicule cible. En prenant en compte l'écart, on détermine un gradient, une variation, d'un paramètre. Par exemple, le gradient vaut 0,1 si l'indicateur est inférieur à Y1(V) et vaut -0,1 si l'indicateur est supérieur à Y2(V). La somme cumulée de ce paramètre à chaque détermination du paramètre divisé par rapport à un seuil maximum est représentatif d'un pourcentage, le pourcentage étant bornée entre 0 et 100%. L'utilisation de la probabilité de présence est particulièrement robuste aux incertitudes de mesures. Dans un mode opératoire, des tests statistiques de franchissement de seuil sont également utilisés.

Dans un mode opératoire ladite conduite autonome est une fonction de régulation de vitesse adaptative. Une régulation de vitesse adaptative a besoin d'avoir une détection fiable de la présence d'un véhicule cible en particulier en entrée ou sortie de virage. Une non fiabilité entraine des variations de vitesse du véhicule égo 101 très importants qui sont actuellement minimisées par des patchs et des bouts de codes complexes, difficiles à paramétrer et ne fonctionnant pas génériquement (aussi bien en ligne droite qu'en virage).

La présente invention ne se limite pas aux formes de réalisation décrites ci-avant à titre d'exemples ; elle s'étend à d'autres variantes.

Ainsi, on a décrit ci-avant un exemple de réalisation dans lequel des positions, des distances, vitesses et accélérations sont exprimés dans un repère pour un paramétrage donné. Le paramétrage est modifiable en fonction du repère considéré. Par exemple une demi largeur d'un objet peut être égale à 0.

## Revendications

1. Procédé de détection d'insertion dans une voie de circulation (103) d'un véhicule, dit véhicule cible, depuis un véhicule autonome, dit véhicule égo (101), pour une conduite autonome dudit véhicule égo (101) en fonction d'un indicateur de présence dudit véhicule cible, ledit véhicule égo (101) circulant sur ladite voie de circulation (103) et comportant des capteurs aptes à fournir des données dudit véhicule égo (101) et de l'environnement extérieure dudit véhicule égo (101), ledit procédé comportant les étapes de :
• Détection (301), à partir de lesdits capteurs, dudit véhicule cible ;
• Détermination (302), à partir de lesdits capteurs, d'au moins une information du positionnement relatif dudit véhicule cible par rapport au véhicule égo (101) ;
• Détermination (303), à partir de lesdits capteurs, d'une trajectoire dudit véhicule égo (101), la trajectoire indiquant des positions estimées dudit véhicule égo (101) sur un horizon de temps prédéterminé ;
• Détermination (304) d'une distance minimale entre ledit véhicule cible et ladite trajectoire, la détermination étant fondée sur ladite au moins une information du positionnement relatif ;
• Détermination (305) d'un premier seuil, dit seuil de sélection, ledit seuil de sélection représentant une distance et étant fondé sur une vitesse longitudinale dudit véhicule égo (101) et sur ledit horizon de temps ;
• Si (307) ladite distance minimale est inférieure audit seuil de sélection, augmentation (309) de l'indicateur de présence dudit véhicule cible ;
• Génération (312) d'une instruction de conduite autonome à partir de l'indicateur de présence.

2. Procédé selon la revendication 1, dans lequel ledit seuil de sélection est égale à Y1(V) = min(Y0 ; LVo + 0,5*AlatMax(V)*t^2 - 0,5*LVC), où min représente une fonction minimum entre valeurs, Y0 est une distance latérale prédéterminée, LVo est une largeur prédéterminée de ladite voie de circulation (103), V est ladite vitesse longitudinale, AlatMax(V) est une accélération latérale maximale fonction de ladite vitesse longitudinale, t est ledit horizon de temps, et LVC est une largeur prédéterminée dudit véhicule cible.

3. Procédé selon l'une des revendications précédentes, dans lequel ledit procédé comporte, en outre, une étape de détermination (306) d'un deuxième seuil, dit seuil de désélection, ledit seuil de désélection représentant une distance strictement supérieure au seuil de sélection, ledit seuil de désélection étant fondé sur une vitesse longitudinale dudit véhicule égo (101) et sur ledit horizon de temps, si (308) ladite distance minimale est supérieure audit seuil de désélection, alors l'indicateur de présence décroît (310), sinon l'indicateur de de présence reste inchangé (311).

4. Procédé selon la revendication 3, dans lequel ledit seuil de désélection est égale à Y2(V) = min(Y0, 0,5*AlatMax(V)*t^2 - 0,5*LVC), où min représente ladite fonction minimum, Y0 est ladite distance latérale prédéterminée, V est ladite vitesse longitudinale, AlatMax(V) est ladite accélération latérale maximale fonction de ladite vitesse longitudinale, t est ledit horizon de temps, et LVC est ladite largeur prédéterminé dudit véhicule cible.

5. Procédé selon l'une des revendications précédentes, dans lequel le procédé est exécuté périodiquement, une probabilité de présence, comprise entre 0% et 100%, est déterminée à partir d'un historique des déterminations dudit indicateur de présence, et ladite conduite autonome est fonction de ladite probabilité de présence.

6. Procédé selon l'une des revendications précédentes, dans lequel ladite conduite autonome est une fonction de régulation de vitesse adaptative.

7. Dispositif (201) comprenant une mémoire (202) associée à au moins un processeur (203) configuré pour mettre en œuvre le procédé selon l'une des revendications précédentes.

8. Véhicule comportant le dispositif selon la revendication précédente.

9. Programme d'ordinateur comprenant des instructions adaptées pour l'exécution des étapes du procédé selon l'une des revendications 1 à 6 lorsque ledit programme est exécuté par au moins un processeur (203).

## Patentansprüche

1. Verfahren zum Erfassen des Einführens in eine Fahrspur (103) eines Fahrzeugs, des Zielfahrzeugs, aus einem autonomen Fahrzeug, dem so genannten Ego-Fahrzeug (101), für ein autonomes Fahren des Ego-Fahrzeugs (101) in Abhängigkeit von einem Anwesenheitsindikator des Zielfahrzeugs, wobei das Ego-Fahrzeug (101) auf der Fahrspur (103) fährt und Sensoren aufweist, die in der Lage sind, Daten des Ego-Fahrzeugs (101) und der äußeren Umgebung des Ego-Fahrzeugs (101) zu liefern, wobei das Verfahren die Schritte umfasst:
• Erfassung (301) des Zielfahrzeugs durch die Sensoren;
• Bestimmung (302) mindestens einer Information über die relative Positionierung des Zielfahrzeugs in Bezug auf das Ego-Fahrzeug (101) aus den Sensoren;
• Ermittlung (303) einer Bahn des Ego-Fahrzeugs (101) aus den Sensoren, wobei die Bahn geschätzte Positionen des Ego-Fahrzeugs (101) über einen vorgegebenen Zeithorizont anzeigt;
• Bestimmung (304) eines Mindestabstands zwischen dem Zielfahrzeug und der Bahn, wobei die Bestimmung auf der mindestens einen Information über die relative Positionierung basiert;
• Bestimmung (305) einer ersten Schwelle, der so genannten Auswahlschwelle, wobei die Auswahlschwelle eine Entfernung darstellt und auf einer Längsgeschwindigkeit des Ego-Fahrzeugs (101) und dem Zeithorizont basiert;
• Wenn (307) der Mindestabstand kleiner als die Auswahlschwelle ist, Erhöhung (309) der Anwesenheitsindikator des Zielfahrzeugs;
• Generierung (312) einer Anweisung für autonomes Fahren aus der Präsenzanzeige.

2. Verfahren nach Anspruch 1, wobei der Auswahlschwellenwert gleich Y1(V) = min(Y0; LVo + 0,5*AlatMax(V)*t^2 - 0,5*LVC) ist, wobei min eine Minimalfunktion zwischen Werten darstellt, Y0 eine vorbestimmte seitliche Distanz ist, LVo eine vorbestimmte Breite der Fahrspur (103) ist, V die Längsgeschwindigkeit ist, AlatMax(V) eine maximale seitliche Beschleunigung als Funktion der Längsgeschwindigkeit ist, t der Zeithorizont ist und LVC eine vorbestimmte Breite des Zielfahrzeugs ist.

3. Verfahren nach einem der vorhergehenden Ansprüche, bei dem das Verfahren ferner einen Schritt des Bestimmens (306) eines zweiten Schwellenwerts umfasst, des so genannten Auswahlschwellenwerts, wobei der genannte Auswahlschwellenwert einen Abstand darstellt, der streng größer als der Auswahlschwellenwert ist, wobei der genannte Auswahlschwellenwert auf einer Längsgeschwindigkeit des genannten Ego-Fahrzeugs (101) und auf dem Zeithorizont basiert, wenn (308) der genannte minimale Abstand größer als der genannte Auswahlschwellenwert ist, dann verringert sich der Anwesenheitsindikator (310), andernfalls bleibt der Anwesenheitsindikator unverändert (311).

4. Verfahren nach Anspruch 3, bei dem die Schwelle für die Abwahl gleich Y2(V) = min(Y0, 0,5*AlatMax(V)*t^2 - 0,5*LVC) ist, wobei min die Minimalfunktion darstellt, Y0 die vorbestimmte seitliche Entfernung ist, V die Längsgeschwindigkeit ist, AlatMax(V) die maximale seitliche Beschleunigung als Funktion der Längsgeschwindigkeit ist, t der Zeithorizont ist und LVC die vorbestimmte Breite des Zielfahrzeugs ist.

5. Verfahren nach einem der vorhergehenden Ansprüche, bei dem das Verfahren periodisch durchgeführt wird, eine Anwesenheitswahrscheinlichkeit zwischen 0% und 100% aus einer Historie der Bestimmungen des Anwesenheitsindikators bestimmt wird und die autonome Leitung eine Funktion der Anwesenheitswahrscheinlichkeit ist.

6. Verfahren nach einem der vorhergehenden Ansprüche, bei dem die autonome Leitung eine adaptive Geschwindigkeitsregelungsfunktion ist.

7. Vorrichtung (201) mit einem Speicher (202), der mit mindestens einem Prozessor (203) verbunden ist, der zur Durchführung des Verfahrens nach einem der vorhergehenden Ansprüche konfiguriert ist.

8. Fahrzeug mit der Vorrichtung nach dem vorhergehenden Anspruch.

9. Computerprogramm, das Befehle umfasst, die zur Ausführung der Schritte des Verfahrens nach einem der Ansprüche 1 bis 6 geeignet sind, wenn das Programm von mindestens einem Prozessor (203) ausgeführt wird.

## Claims

1. Method for detecting insertion into a taxiway (103) of a vehicle, referred to as a target vehicle, from an autonomous vehicle, referred to as an ego vehicle (101), for autonomous driving of said ego vehicle (101) as a function of an indicator of the presence of said target vehicle, said ego vehicle (101) travelling on said taxiway (103) and comprising sensors capable of providing data of said ego vehicle (101) and of the external environment of said ego vehicle (101), said method comprising the steps of:
• Detection (301), from said sensors, of said target vehicle;
• Determination (302), from said sensors, of at least one piece of information on the relative positioning of said target vehicle by report to the ego vehicle (101);
• Determination (303), from said sensors, of a trajectory of said EGO vehicle (101), the trajectory indicating estimated positions of said EGO vehicle (101) over a predetermined horizon of time;
• Determination (304) of a minimum distance between said target vehicle and said trajectory, the determination being based on said at least one item of relative positioning information;
• Determination (305) of a first threshold, called the selection threshold, said selection threshold representing a distance and being based on a longitudinal speed of said ego vehicle (101) and on said time horizon;
• If (307) said minimum distance is less than said selection threshold, increase (309) of the presence indicator of said target vehicle;
• Generation (312) of an autonomous driving instruction from the presence indicator.

2. Method according to claim 1, wherein said selection threshold is equal to Y1(V) = min(Y0; LVo + 0.5*AlatMax(V)*t^2 - 0.5*LVC), where min represents a minimum function between values, Y0 is a predetermined lateral distance, LVo is a predetermined width of said taxiway (103), V is said longitudinal speed, AlatMax(V) is a maximum lateral acceleration dependent on said longitudinal speed, t is said horizon of time, and LVC is a predetermined width of said target vehicle.

3. Method according to one of the previous claims, wherein said method further comprises a step of determining (306) a second threshold, called the deselection threshold, said deselection threshold representing a distance strictly greater than the selection threshold, said deselection threshold being based on a longitudinal speed of said ego vehicle (101) and on said time horizon, if (308) said minimum distance is greater than said deselection threshold, then the presence indicator decreases (310), otherwise the presence indicator remains unchanged (311).

4. Method according to claim 3, wherein said deselection threshold is equal to Y2(V) = min(Y0, 0.5*AlatMax(V)*t^2 - 0.5*LVC), where min represents said minimum function, Y0 is said predetermined lateral distance, V is said longitudinal speed, AlatMax(V) is said maximum lateral acceleration as a function of said longitudinal speed, t is said time horizon, and LVC is said predetermined width of said target vehicle.

5. Method according to one of the previous claims, in which the method is executed periodically, a presence probability of between 0% and 100% is determined from a log of the determinations of said presence indicator, and said autonomous driving is a function of said presence probability.

6. Method according to one of the previous claims, wherein said autonomous driving is an adaptive speed regulation function.

7. Device (201) comprising a memory (202) associated with at least one processor (203) configured to implement the method according to one of the previous claims.

8. Vehicle comprising the device according to the previous claim.

9. A computer Plan comprising instructions adapted for executing the steps of the method according to one of claims 1 to 6 when said plan is executed by at least one processor (203).
